# EUROPEAN PATENT SPECIFICATION

(11) **EP 2 449 846 B1**
(45) Date of publication and mention of the grant of the patent: **11.11.2020**
(21) Application number: 10793855.7
(22) Date of filing: 01.07.2010
(51) Int. Cl.: H04W 28/18, H04W 8/00, H04W 48/18, H04W 84/12, H04W 84/18, H04W 88/06

(54) **COMMUNICATION APPARATUS, COMMUNICATION APPARATUS CONTROL METHOD AND PROGRAM**
KOMMUNIKATIONSVORRICHTUNG, STEUERUNGSVERFAHREN FÜR KOMMUNIKATIONVORRICHTUNG UND PROGRAMM
APPAREIL DE COMMUNICATION, PROCÉDÉ DE COMMANDE D'APPAREIL DE COMMUNICATION ET PROGRAMME

(30) Priority: 03.07.2009 JP 2009158943
(43) Date of publication of application: 09.05.2012
(73) Proprietor: Canon Kabushiki Kaisha, Tokyo 146-8501 (JP)
(72) Inventor: SAKAI, Tatsuhiko, Tokyo 146-8501 (JP)
(74) Representative: Canon Europe Limited
(86) International application number: PCT/JP2010/004326
(87) International publication number: WO 2011/001682

(56) References cited:
- EP-A2- 1 241 838
- EP-A2- 1 471 691
- JP-A- 2008 219 358
- JP-A- 2009 075 806
- US-A1- 2006 058 016

## Description

### Technical Field

The present invention relates to a communication apparatus, a communication apparatus control method, and a program.

### Background Art

In wireless communication represented by a wireless local access network (LAN) based on the Institute of Electrical and Electronics Engineers (IEEE) 802.11 standard series, there are many setting items to be set before use. Examples of such settings include a service set identifier (SSID) as a network identifier, an encryption system, an encryption key, an authentication method, an authentication key, and the like. It is very difficult for a user to manually input all of these settings.

Accordingly, various manufacturers have proposed automatic setting methods to enable easy setting of communication parameters in a wireless device. These automatic setting methods automatically set communication parameters between devices to be connected based on predetermined procedures and messages, by providing communication parameters from one of the devices to another device. Non-Patent Literature 1 discusses an example of automatic setting of communication parameters in wireless LAN infrastructure mode communication (infrastructure communication).

Patent Literatures 1 to 3 discuss examples of automatic setting of communication parameters in wireless LAN ad hoc mode communication (ad hoc communication). In Patent Literature 1 to 3, a device performing ad hoc communication determines a device (providing device) that provides communication parameters from among the devices joining the network, and the providing device provides the communication parameters to the other device (receiving device).

Thus, by utilizing automatic setting of communication parameters, the user can automatically set the communication parameters by a simple operation.

### Citation List

### Patent Literature

PTL 1: Japanese Patent Application Laid-Open No. 2006-352282
PTL 2: Japanese Patent Application Laid-Open No. 2006-311138
PTL 3: Japanese Patent Application Laid-Open No. 2006-309458

### Non Patent Literature

[NPL 1]
Wi-Fi Certified (TM) for Wi-Fi Protected Setup: Easing the User Experience for Home and Small Office Wi-Fi (R) Networks, http://www.wi-fi.org/wp/wifi-protected-setup

US 2006/0058016 describes a wireless projector equipped with an embedded download server to allow users to directly download transport software and driver from a server to a client device. The client device directly downloads the transport software between the client device and the projector.

EP 1471691 describes determining whether a wired communication module has been linked to a wired communication network, setting a wireless communication operating mode of a wireless communication module to an infrastructure mode when it is determined that the wired communication module has not been linked to the wired communication network, and setting the wireless communication mode to an ad-hoc mode when it is determined that the wired communication module has been linked to the wired communication network.

EP 1241838 describes a system which examines predefined user preferences or profile settings to determine which of a competing number of wireless networks available it should connect, and what type of authentication should be used for such connection.

### [Summary of Invention]

### [Technical Problem]

A case will now be considered in which a plurality of communication parameter automatic setting methods is installed on a device. Conventionally, for a device in which a plurality of automatic setting functions are installed, the user selects the automatic setting method to be activated via a menu screen. However, in this case, the user himself/herself has to select the appropriate communication parameter automatic setting method, so that user-friendliness is poor. If the user selects the wrong automatic setting method, automatic setting processing is not executed, and wireless communication cannot be performed.

### [Solution to Problem]

The present invention is directed to a communication apparatus capable of executing a plurality of communication parameter automatic setting methods, and improving user-friendliness.

Aspects of the present invention are provided by the independent claims.

### [Advantageous Effects of Invention]

According to the present invention, even when a plurality of communication parameter automatic setting methods is installed on a device, the communication parameter automatic setting method can be automatically executed even without the user selecting the setting method. Consequently, user-friendliness improves.

Further features and aspects of the present invention will become apparent from the following detailed description of exemplary embodiments with reference to the attached drawings.

### [Brief Description of Drawings]

The accompanying drawings, which are incorporated in and constitute a part of the specification, illustrate exemplary embodiments, features, and aspects of the invention and, together with the description, serve to explain the principles of the invention.
[Fig. 1] Fig. 1 is a block configuration diagram of an apparatus according to an exemplary embodiment of the present invention.
[Fig. 2] Fig. 2 is a software function diagram of an apparatus according to an exemplary embodiment of the present invention.
[Fig. 3] Fig. 3 is a network configuration diagram according to an exemplary embodiment of the present invention.
[Fig. 4] Fig. 4 is an operation flowchart of communication processing of an apparatus A according to an exemplary embodiment of the present invention.
[Fig. 5] Fig. 5 is an operation sequence diagram of an apparatus A, an apparatus B, and an access point according to an exemplary embodiment of the present invention.
[Fig. 6] Fig. 6 is an operation sequence diagram of an apparatus A, an apparatus B, and an access point according to an exemplary embodiment of the present invention.
[Fig. 7] Fig. 7 is an operation sequence diagram of an apparatus A, an apparatus B, and an access point according to an exemplary embodiment of the present invention.

### Description of Embodiments

Various exemplary embodiments, features, and aspects of the invention will be described in detail below with reference to the drawings.

### Example 1

A communication apparatus according to the present exemplary embodiment will now be described in more detail with reference to the drawings. Although the following example is described using a LAN system based on the IEEE 802.11 series, the communication mode is not limited to a wireless LAN based on IEEE 802.11.

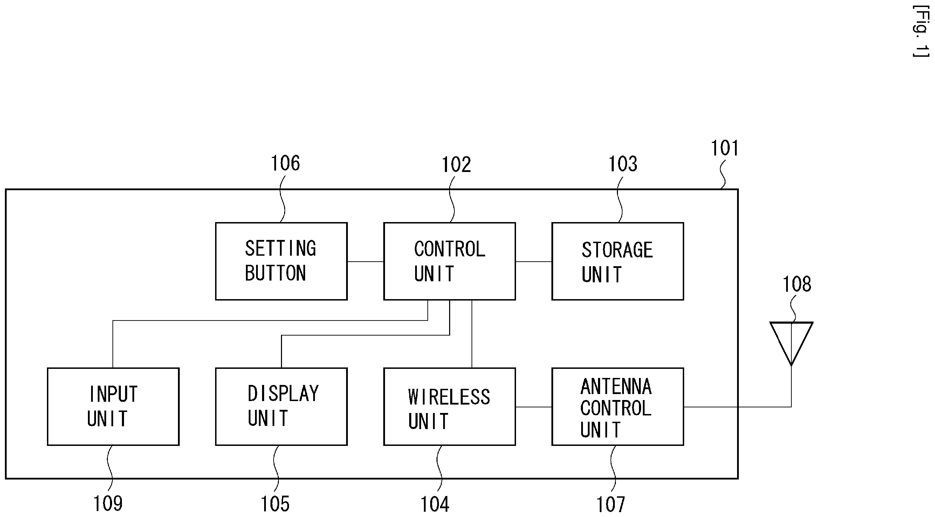

The hardware configuration according to the present exemplary embodiment will now be described. Fig. 1 is a block diagram illustrating an example of the configuration of respective apparatuses to be described below. An apparatus 101 includes a control unit 102 that controls the overall apparatus by executing a control program stored in a storage unit 103. The control unit 102 is a computer such as a central processing unit (CPU), a microprocessor unit (MPU), and the like. The control unit 102 performs automatic setting control of communication parameters with another apparatus. Examples of communication parameter automatic setting control include automatic setting processing of a wireless LAN infrastructure mode and automatic setting processing of a wireless LAN ad hoc net mode.

The storage unit 103 stores various information, such as a computer program for control that is executed by the control unit 102, and communication parameters. Various below-described operations are performed by the control unit 102 executing the control program stored in the storage unit 103. As the storage unit 103, a memory such as a read-only memory (ROM) and a random access memory (RAM) may be used, or a flexible disk, a hard disk, an optical disc, a compact disc (CD) ROM, a CD-recordable (CD-R), a magnetic tape, a non-volatile memory card, a digital versatile disc (DVD), and the like may be used.

A wireless unit 104 performs wireless communication. A display unit 105 performs various displays. The display unit 105 has a function for outputting visually recognizable information, such as by a liquid crystal display (LCD) or a light-emitting diode (LED), or a function enabling audio output such as by a speaker. A setting button 106 serves as a trigger for activating communication parameter setting processing. When the control unit 102 detects an operation from the setting button 106 by the user, the control unit 102 executes the below-described processing. The configuration illustrated in Fig. 1 also includes an antenna control unit 107, an antenna 108, and an input unit 109, which allows the user to perform various inputs.

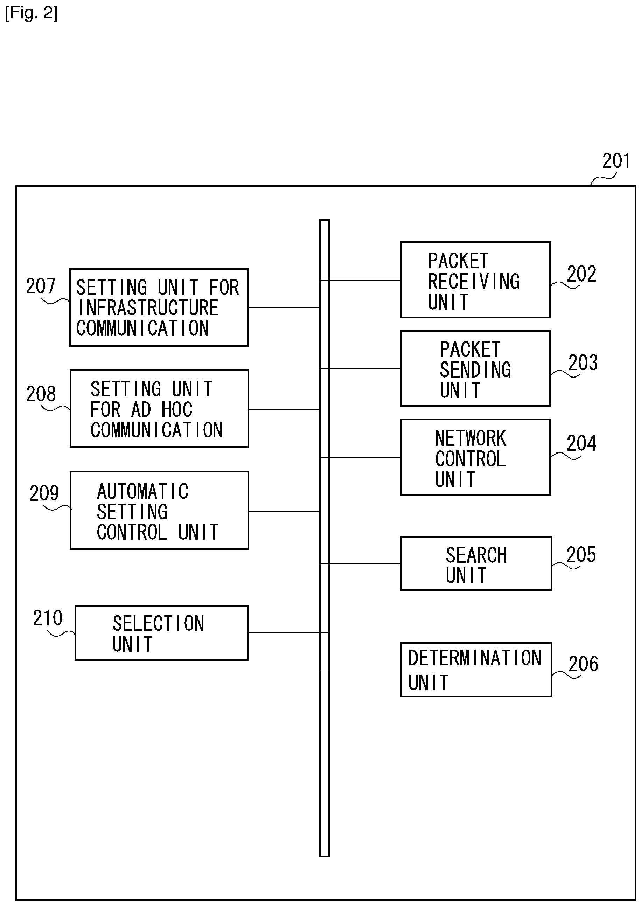

Fig. 2 is a configuration example of software function blocks executed by an apparatus in a below-described communication parameter automatic setting operation. In Fig. 2, an apparatus 201 includes a packet receiving unit 202 that receives packets relating to various kinds of communication. Reception of a beacon (notification signal) is performed by the packet receiving unit 202. In addition, a device search signal such as a probe request is also received by the packet receiving unit 202. A probe request can also be called a network search signal for searching for a desired network. Further, reception of a probe response, which is a signal in response to a probe request, is also performed by the packet receiving unit 202.

A packet sending unit 203 sends packets relating to various kinds of communication. Sending of a beacon is performed by the packet sending unit 203. In addition, the packet sending unit 203 also performs sending of a probe request and sending of a probe response, which is a signal in response to a probe request. Various information about the sending device (self-information) is added to the device search signal and to the response signal thereof. This self-information also includes information indicating whether communication parameter automatic setting processing is activating. A network control unit 204 controls network connection. Connection processing to the wireless LAN network is executed by the network control unit 204.

A search unit 205 searches for nearby devices by sending a probe request using the packet sending unit 203, and receiving a probe response using the packet receiving unit 202. The search unit 205 also searches for nearby networks by receiving a beacon signal using the packet receiving unit 202.

Based on a search result of the search unit 205, a determination unit 206 determines whether an access point activating automatic setting processing is present based on a detection result obtained by performing detection processing of access points activating communication parameter automatic setting processing for infrastructure communication.

Examples of the communication parameter automatic setting processing for infrastructure communication include industry-standard processing, such as Wi-Fi Protected Setup, and proprietary processing provided by individual manufacturers. Further, the determination unit 206 also determines whether a device activating communication parameter automatic setting processing for ad hoc mode communication is present.

An infrastructure communication setting unit 207 receives communication parameters for infrastructure communication from an access point serving as a station. This function block executes a predetermined first setting processing protocol with an access point, and receives from the access point the communication parameters required for performing wireless communication, such as the SSID as a network identifier, the encryption system, the encryption key, the authentication method, the authentication key, and the like.

An ad hoc communication setting unit 208 provides or receives communication parameters for ad hoc communication to or from another apparatus. This function block executes a predetermined second setting processing protocol based on ad hoc communication with the other apparatus, and performs the communication parameter automatic setting processing required for performing wireless communication, such as the SSID as a network identifier, the encryption system, the encryption key, the authentication method, the authentication key and the like.

An automatic setting control unit 209 controls to activate of an automatic setting method. This function block selectively activates either the setting process of the infrastructure network by the infrastructure communication setting unit 207 or the setting process of the ad hoc network by the ad hoc communication setting unit 208 in order to perform automatic setting processing for the method selected by a selection unit 210. Further, the automatic setting control unit 209 performs detection processing of setting button 106 operations by monitoring whether the setting button 106 is operated by the user.

The selection unit 210 selects whether to execute communication parameter automatic setting processing for infrastructure communication or to execute communication parameter automatic setting processing for ad hoc communication based on a determination result by the determination unit 206.

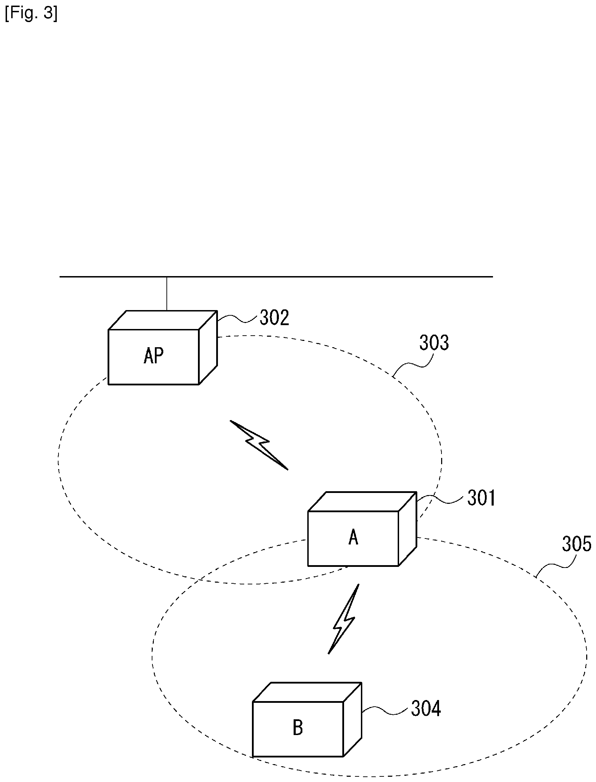

Fig. 3 illustrates a communication apparatus A 301 (apparatus A), an access point 302, and a communication apparatus B 304 (apparatus B). Apparatus A has the configuration as illustrated in Figs. 1 and 2. The access point 302 provides communication parameters to the apparatus A by executing communication parameter automatic setting processing for infrastructure communication based on an instruction from the user, and communicating over a network 303.

In infrastructure communication, the apparatus A is operated as a station (slave station) of the access point 302, and performs communication via the access point 302. Further, in ad hoc communication, the apparatus A performs direct communication with another apparatus (apparatus B) without going via the access point 302. The access point 302 may also be referred to as a base station, a key station, a control apparatus (station) and the like. The access point 302 creates (constructs) the infrastructure network, and performs control to allow the station apparatus (slave station) to communicate.

Further, the apparatus B shares the communication parameters with the apparatus A by executing communication parameter automatic setting processing for ad hoc communication, and performing communication over a network 305. The communication parameters may be provided from the apparatus A to the apparatus B, or from the apparatus B to the apparatus A. In the present exemplary embodiment, infrastructure communication and ad hoc communication are performed by a method based on the IEEE 802.11 series.

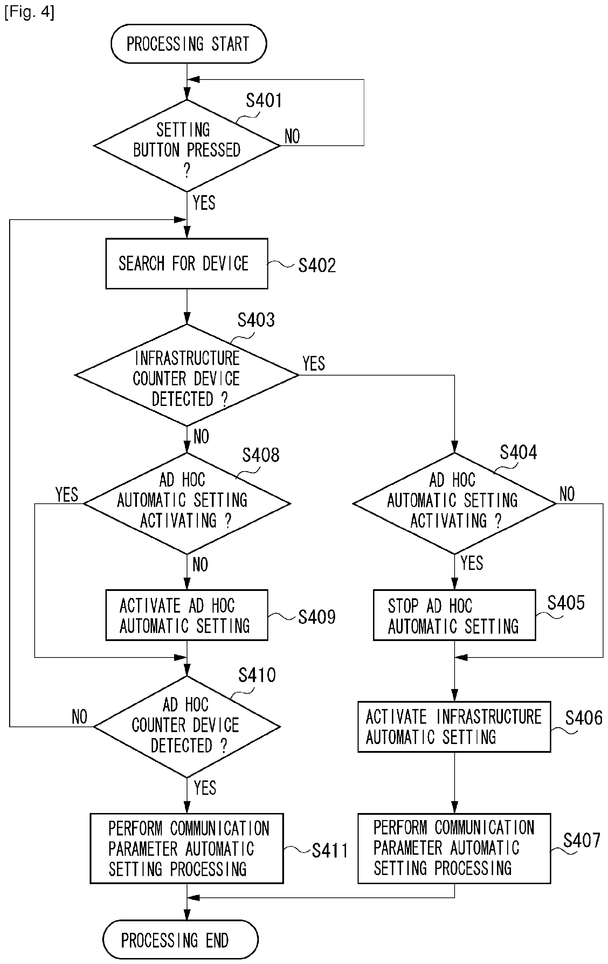

Fig. 4 is an operation flowchart of communication processing executed when the setting button 106 is pressed by the user in the apparatus A. The processing performed in Fig. 4 is performed by the control unit 102 reading a computer program stored in the storage unit 103 and executing the read computer program.

In step S401, the control unit 102 (automatic setting control unit 209) monitors whether the setting button 106 has been pressed. If the control unit 102 detects that the setting button 106 has been pressed by the user (YES in step S401), the control unit 102 activates the search unit 205. In step S402, the search unit 205 searches for nearby devices by sending a probe request using the packet sending unit 203, and receiving a probe response using the packet receiving unit 202.

Further, the search unit 205 may also search for nearby networks by receiving a beacon signal using the packet receiving unit 202. In step S403, the determination unit 206 determines whether an access point activating communication parameter automatic setting processing for infrastructure communication is present by confirming the self-information included in the received beacon or probe response.

If an access point activating communication parameter automatic setting processing for infrastructure communication is present (YES in step S403), the selection unit 210 determines that communication parameter automatic setting processing for infrastructure communication is to be executed. Then, in step S404, if the selection unit 210 selects execution of automatic setting processing for infrastructure communication, the automatic setting control unit 209 confirms whether the ad hoc communication setting unit 208 is activating.

If the ad hoc communication setting unit 208 is activating (YES in step S404), in step S405, the automatic setting control unit 209 stops operation of the ad hoc communication setting unit 208. Then, in step S406, the automatic setting control unit 209 activates the setting process by the infrastructure communication setting unit 207. In step S407, the infrastructure communication setting unit 207 executes communication parameter automatic setting processing with the access point 302.

Further, in step S404, if the ad hoc communication setting unit 208 is not activating (NO in step S404), the processing proceeds to step S406. In step S406, the automatic setting control unit 209 activates the setting process by the infrastructure communication setting unit 207. Then, in step S407, the infrastructure communication setting unit 207 executes communication parameter automatic setting processing with the access point 302. As a result of the infrastructure communication setting unit 207 executing automatic setting processing with the access point 302, the apparatus A acquires the communication parameters from the access point 302.

When the apparatus A acquires the communication parameters from the access point 302, based on a control by the network control unit 204, the apparatus A utilizes the acquired communication parameters to connect to the access point 302. Then, the apparatus A joins the infrastructure network formed by the access point 302, and performs communication.

Based on the confirmation result of step S403, if it is determined that an access point activating communication parameter automatic setting processing for infrastructure communication is not present (NO in step S403), the selection unit 210 determines that communication parameter automatic setting processing for ad hoc communication is to be executed.

If the selection unit 210 determines that automatic setting processing for ad hoc communication is to be executed (NO in step S403), in step S408, the automatic setting control unit 209 confirms whether the ad hoc communication setting unit 208 is activating. If the ad hoc communication setting unit 208 is not activating (NO in step S408), in step S409, the automatic setting control unit 209 activates the ad hoc communication setting unit 208.

In step S410, the automatic setting control unit 209 confirms whether a device activating communication parameter automatic setting processing for ad hoc communication is present by confirming the search result acquired by the search performed in step S402. If a device (apparatus B) activating communication parameter automatic setting processing for ad hoc communication is present (YES in step S410), in step S411, the ad hoc communication setting unit 208 executes communication parameter automatic setting processing with the apparatus B, and shares the communication parameters.

When the apparatus A shares the communication parameters with the apparatus B, based on a control from the network control unit 204, the apparatus A utilizes the acquired communication parameters to form an ad hoc network with the apparatus B. Then, communication is performed between the apparatus A and the apparatus B.

Based on the determination result of step S410, if it is determined that a device activating communication parameter automatic setting processing for ad hoc communication is not present (NO in step S410), the processing returns to step S402 with the ad hoc communication setting unit 208 still activating, and the search unit 205 again tries to search for devices.

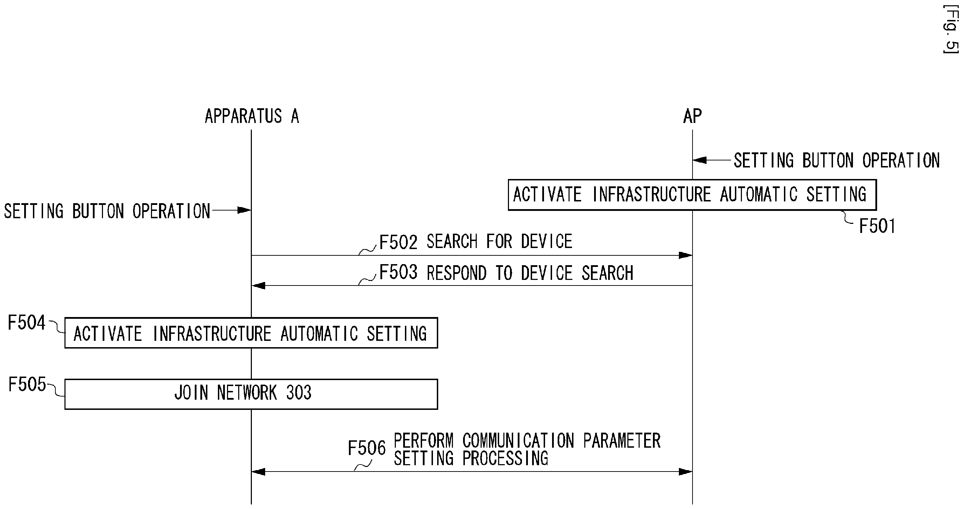

Fig. 5 illustrates a processing sequence when the setting button of the access point 302 is pressed, automatic setting processing is activated, then the setting button 106 on the apparatus A is pressed, and communication parameter automatic setting processing is executed between the apparatus A and the access point 302.

When the setting button of the access point 302 is pressed, in F501, the access point 302 activates communication parameter automatic setting processing for infrastructure communication. After activating this, the access point 302 adds information indicating that the access point 302 is activating automatic setting processing to the beacon or probe response, and sends that beacon or probe response.

When the setting button 106 of the apparatus A is pressed, the apparatus A activates the processing illustrated in Fig. 4. In F502, the apparatus A sends a device search signal (probe request) for searching for a network, and confirms whether there are any nearby devices activating automatic setting processing. In F503, the access point 302 sends to the apparatus A a response signal (probe response) including self-information indicating that the access point 302 is activating automatic setting processing.

When the apparatus A receives a probe response from the access point 302, the apparatus A confirms that communication parameter automatic setting processing for infrastructure communication is activating. If the apparatus A discovers an access point that is activating communication parameter automatic setting processing for infrastructure communication, in F504, the apparatus A activates communication parameter automatic setting processing for infrastructure communication.

Then, in F505, the apparatus A joins the network 303 of the access point 302. In F506, the apparatus A executes automatic setting processing for infrastructure communication with the access point 302. Consequently, the apparatus A acquires the communication parameters from the access point 302.

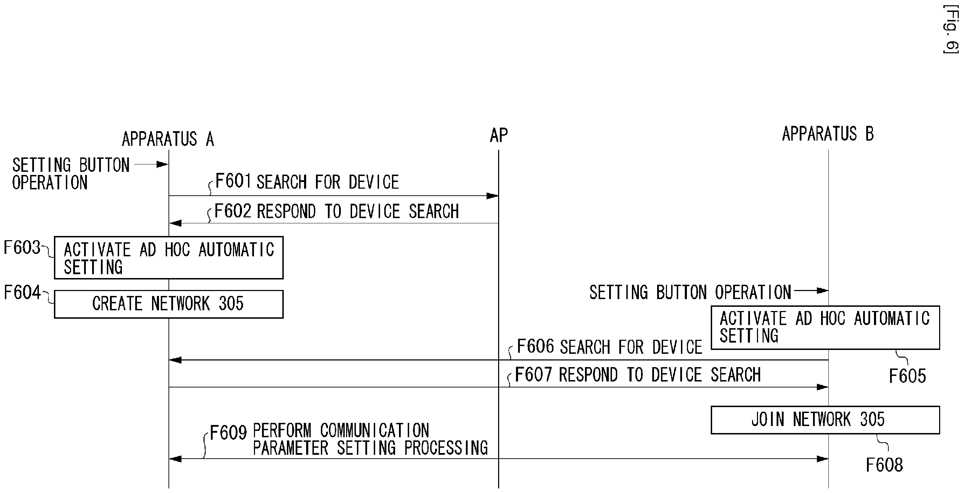

Fig. 6 illustrates a processing sequence when the setting button 106 is pressed on the apparatus A, then the setting button is pressed on the apparatus B, and communication parameter automatic setting processing is executed between the apparatus A and the apparatus B.

When the setting button 106 of the apparatus A is pressed, the apparatus A activates the processing illustrated in Fig. 4. In F601, the apparatus A sends a probe request for searching for a network, and confirms whether there are any nearby devices activating automatic setting processing. In F602, the access point 302 sends a probe response indicating that the access point 302 is not activating automatic setting processing to the apparatus A. Consequently, in F603, the apparatus A activates communication parameter automatic setting processing for ad hoc communication. After activating this process, in F604, the apparatus A creates (constructs) the network 305.

Subsequently, after the setting button of the apparatus B is pressed, in F605, the apparatus B activates communication parameter automatic setting processing for ad hoc communication. Further, similar to the apparatus A, the apparatus B may also perform the communication parameter automatic setting processing for ad hoc communication by executing the processing of Fig. 4. If the communication parameter automatic setting processing for ad hoc communication is activated, in F606, the apparatus confirms whether there are any nearby devices activating communication parameter automatic setting processing for ad hoc communication.

When the apparatus A receives the probe request sent from the apparatus B, in F607, the apparatus A sends to the apparatus B a probe response including self-information indicating that the apparatus A is activating automatic setting processing. When the apparatus B receives the probe response sent from the apparatus A, in F608, the apparatus B joins the network 305 created by the apparatus A. Then, in F609, communication parameter automatic setting processing is performed between the apparatus A and the apparatus B. In the automatic setting processing between the apparatus A and the apparatus B, the communication parameters may be provided from the apparatus A to the apparatus B, or from the apparatus B to the apparatus A.

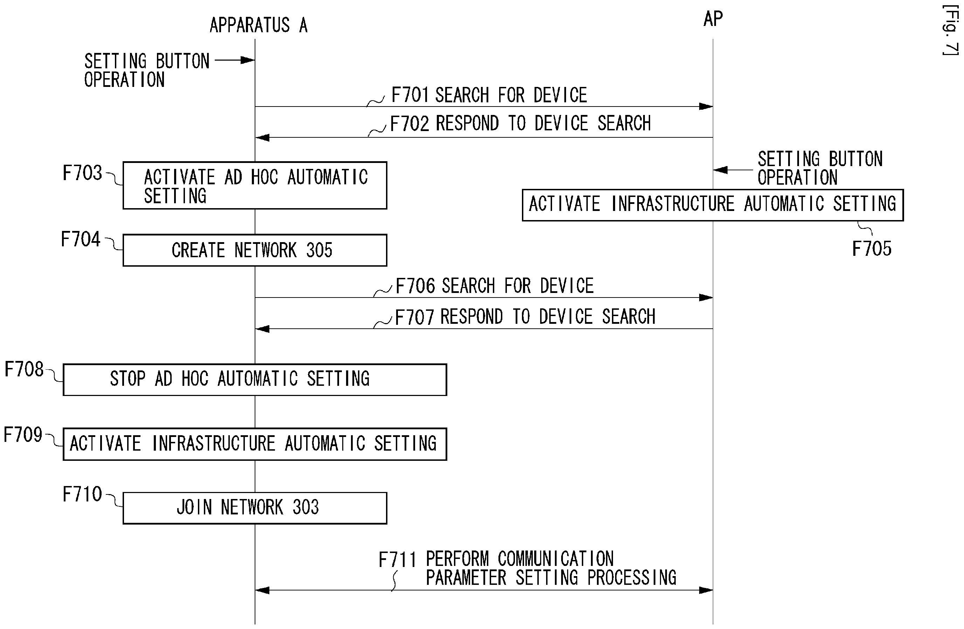

Fig. 7 illustrates a processing sequence when the setting button 106 is pressed on the apparatus A, then the setting button is pressed on the access point 302, and communication parameter automatic setting processing is executed between the apparatus A and the access point 302.

When the setting button 106 of the apparatus A is pressed, the apparatus A activates the processing illustrated in Fig. 4. In F701, the apparatus A sends a probe request, and confirms whether there are any nearby devices activating automatic setting processing. In this example, since the access point 302 is not activating automatic setting processing, in F702, the access point 302 sends a probe response indicating that the access point 302 is not activating automatic setting processing to the apparatus A. Consequently, in F703, the apparatus A activates communication parameter automatic setting processing for ad hoc communication. After activating this process, in F704, the apparatus A creates the network 305, and then continues the device search processing illustrated in Fig. 4.

Subsequently, when the setting button of the access point 302 is pressed, in F705, the access point 302 activates communication parameter automatic setting processing for infrastructure communication. After activating this process, the access point 302 adds information indicating that the access point 302 is activating automatic setting processing to the beacon or probe response, and sends that beacon or probe response.

Since the apparatus A has not found a counterparty, which is activating automatic setting processing, in F706, the apparatus A resends a probe request to confirm whether there are any nearby devices activating automatic setting processing. The access point 302 receives this probe request. Then, in F707, the access point 302 returns a probe response to which information indicating that the access point 302 is activating automatic setting processing is added.

Further, in F707, the apparatus A receives from the access point 302 the probe response including the self-information indicating that the access point 302 is activating automatic setting processing. When receiving this probe response, the apparatus A recognizes the fact that the access point 302 is activating communication parameter automatic setting processing for infrastructure communication. Consequently, in F708, the apparatus A stops the communication parameter automatic setting processing for ad hoc communication that had been activating. Then, in F709, the apparatus A activates communication parameter automatic setting processing for infrastructure communication.

When the communication parameter automatic setting processing for infrastructure communication activates, in F710, the apparatus A joins the network 303 of the access point 302. Then, in F711, the apparatus A executes automatic setting processing with the access point 302, and acquires the communication parameters from the access point 302.

Thus, the apparatus A executes appropriate communication parameter automatic setting processing by automatically detecting nearby devices that are activating automatic setting processing. Further, when the device search of step S402 in Fig. 4 is executed, in some cases a plurality of devices activating automatic setting processing may be detected.

In such a case, the automatic setting control unit 209 may execute communication parameter automatic setting processing with an unintended apparatus. To prevent acquisition or provision of communication parameters from an unintended counterparty, the processing is ended as an error. For example, in step S402 of Fig. 4, if the presence of an access point activating communication parameter automatic setting processing for infrastructure communication is recognized, as performed in step S410, the automatic setting control unit 209 confirms whether a device activating communication parameter automatic setting processing for ad hoc communication is present.

When a device activating communication parameter automatic setting processing for ad hoc communication is recognized, and both communication parameter automatic setting processing for infrastructure communication and communication parameter automatic setting processing for ad hoc communication are activating is recognized, the processing is ended as an error.

Further, when a plurality of access points activating communication parameter automatic setting processing for infrastructure communication are recognized, and a plurality of devices activating communication parameter automatic setting processing for ad hoc communication are recognized, the processing is ended. Thus, when there are a plurality of counterparties activating communication parameter automatic setting processing, automatic setting processing is not performed. This is to prevent acquisition or provision of communication parameters from or to an unintended counterparty due to communication parameter automatic setting processing being executed with an unintended counterparty.

Thus, even when a plurality of communication parameter automatic setting processing methods are installed in the apparatus, the communication parameter automatic setting processing method can be automatically selected and executed even if the user does not select the method, thereby increasing user-friendliness. In the present exemplary embodiment described above, automatic setting processing is selected based on whether the access point is activating automatic setting processing for infrastructure communication or some other apparatus (station) is activating automatic setting processing for ad hoc communication. Further, since the selected processing is executed, automatic setting processing suitable for the environment can be executed, thereby increasing user-friendliness.

The exemplary embodiment of the present invention has been described above. However, this exemplary embodiment is for the purpose of illustrating the present invention, and is in no way meant to limit the scope of the present invention. The above-described exemplary embodiment may be variously modified within the scope of the present invention. Further, the exemplary embodiment has been described using a wireless LAN based on IEEE 802.11 as an example. However, the present invention may also be employed in some other wireless medium, such as wireless universal serial bus (USB), MBOA, Bluetooth(registered trademark), ultra-wideband (UWB), ZigBee and the like. In addition, the present invention can also be employed in a wired communication medium, such as a wired LAN.

Here, MBOA is an abbreviation for multi band OFDM alliance. UWB includes wireless USB, wireless 1394, wireless network (WINET), and the like.

While the present invention has been described with reference to exemplary embodiments, it is to be understood that the invention is not limited to the disclosed exemplary embodiments. The scope of the following claims is to be accorded the broadest interpretation.

This application claims priority from Japanese Patent Application No. 2009-158943 filed July 3, 2009.

## Claims

1. A communication apparatus (A, 301), comprising:
a first setting unit (207) for executing a first setting process (S404-S407) for setting communication parameters with an access point (AP, 302);
a second setting unit (208) for executing a second setting process (S408-S411) for setting communication parameters with another communication apparatus (B, 304) that is not an access point (AP, 302);
a detection unit (205, 206) configured to detect (S402) an apparatus (AP, 302; B, 304) that is activating the first or second setting process;
a selection unit (210) configured to select (S403) whether to perform the first setting process (S404-S407) by the first setting unit (207) or to perform the second setting process (S408-S411) by the second setting unit (208), based on the detection performed by the detection unit (205, 206),
wherein if an access point (AP, 302) that is activating the first setting process is detected by the detection unit (205, 206), the selection unit (210) selects executing the first setting process (S404-S407) by the first setting unit (207), and if an access point (AP, 302) that is activating the first setting process (S404-S407) is not detected by the detection unit (205, 206), the selection unit (210) selects executing the second setting process (S408-S411) by the second setting unit (208); and
a control unit (209) configured to control to execute neither the first setting process nor the second setting process if both an access point (AP, 302) that is activating the first setting process and an apparatus (B, 304) that is activating the second setting process are detected by the detection unit (205, 206) .

2. The communication apparatus (A, 301) according to claim 1, wherein if an access point (AP, 302) activating the first setting process (S404-S407) is detected by the detection unit (205, 206) and another communication apparatus (B, 304) that is activating the second setting process (S408-S411) is not detected, the selection unit (210) selects executing the first setting process (S404-S407) by the first setting unit (207).

3. The communication apparatus (A, 301) according to claim 1 or2, wherein if another communication apparatus (B, 304) that is activating the second setting process (S408-S411) is detected by the detection unit (205, 206) and an access point (AP, 302) that is activating the first setting process (S404-S407) is not detected by the detection unit (205, 206), the selection unit (210) selects executing the second setting process (S408-S411) by the second setting unit (208).

4. The communication apparatus (A, 301) according to any one of claims 1 to 3, wherein if the selection unit (210) selects and activates the second setting processing (S408-S411) by the second setting unit (208), and neither an access point (AP, 302) that is activating the first setting process (S404-S407) nor another communication apparatus (B, 304) that is activating the second setting process (S408-S411) is detected (S410) by the detection unit (205, 206), the detection unit (205, 206) detects (S402) an apparatus that is activating communication parameter setting processing in a state in which the second setting process (S408-S411) by the second setting unit (208) is activating.

5. The communication apparatus (A, 301) according to claim 4, wherein after the second setting process (S408-S411) by the second setting unit (208) is activated, if an access point (AP, 302) that is activating the first setting processing (S404-S407) is detected by the detection unit (205, 206), the communication apparatus (A, 301) stops the second setting process (S408-S411).

6. The communication apparatus (A, 301) according to claim 1, wherein the detection unit (205, 206) is configured to detect an access point (AP, 302) that is activating the first setting process (S404-S407) or another apparatus (B, 304) that is activating the second setting process (S408-S411) in an ad hoc mode.

7. The communication apparatus (A, 301) according to claim 1, wherein the communication parameters set in the first or second setting process includes at least one of an encryption system, an encryption key, an authentication method and an authentication key.

8. The communication apparatus (A, 301) according to claim 1, wherein the first setting process is Wi-Fi Protected Setup.

9. The communication apparatus (A, 301) according to claim 1, wherein the second setting process is a setting process for setting a communication parameter for directly communicating with the other communication apparatus (B, 304) and includes receiving a communication parameter from the other communication apparatus (B, 304) or providing a communication parameter to the other communication apparatus (B, 304).

10. The communication apparatus (A, 301) according to claim 1, wherein the second setting process is a process for setting a communication parameter for ad hoc communication.

11. A method for controlling a communication apparatus (A, 301), comprising:
detecting (S402), by a detection unit (205, 206), an apparatus (AP, 302; B, 304) that is activating communication parameter setting processing; and
selecting (S403) whether to execute communication parameter setting processing with an access point (AP, 302) based on a first setting processing (S404-S407) or to execute communication parameter setting processing with another communication apparatus (B, 304), which is different from the access point (AP, 302), based on second setting processing (S408-S411), according to the detection result (S402);
wherein if an access point (AP, 302) that is activating the first setting process is detected by the detection unit (205, 206), the communication apparatus (A, 301) selects executing the first setting process (S404-S407), and if an access point (AP, 302) that is activating the first setting process (S404-S407) is not detected, the communication apparatus (A, 301) selects executing the second setting process (S408-S411);
executing neither the first setting process nor the second setting process if both an access point (AP, 302) that is activating the first setting process and an apparatus (B, 304) that is activating the second setting process are detected by the detection unit (205, 206).

12. A computer program comprising instructions which, when the program is executed by a computer, cause the computer to carry out the method of claim 11.

## Patentansprüche

1. Kommunikationsvorrichtung (A, 301), umfassend:
eine erste Einstellungseinheit (207) zum Ausführen einer ersten Einstellungsverarbeitung (S404-S407) zum Einstellen von Kommunikationsparametern mit einem Zugangspunkt (AP, 302);
eine zweite Einstellungseinheit (208) zum Ausführen einer zweiten Einstellungsverarbeitung (S408-S411) zum Einstellen von Kommunikationsparametern mit einer anderen Kommunikationsvorrichtung (B, 304), die kein Zugangspunkt (AP, 302) ist;
eine Erfassungseinheit (205, 206), die konfiguriert ist, eine Vorrichtung (AP, 302; B, 304) zu erfassen (S402), die gerade die erste oder zweite Einstellungsverarbeitung aktiviert;
eine Auswahleinheit (210), die konfiguriert ist, basierend auf der von der Erfassungseinheit (205, 206) durchgeführten Erfassung auszuwählen (S403), ob die erste Einstellungsverarbeitung (S404-S407) durch die erste Einstellungseinheit (207) durchgeführt werden soll oder die zweite Einstellungsverarbeitung (S408-S411) durch die zweite Einstellungseinheit (208) durchgeführt werden soll,
wobei, wenn ein Zugangspunkt (AP, 302), der gerade die erste Einstellungsverarbeitung aktiviert, von der Erfassungseinheit (205, 206) erfasst wird, die Auswahleinheit (210) Ausführen der ersten Einstellungsverarbeitung (S404-S407) durch die erste Einstellungseinheit (207) auswählt, und wenn ein Zugangspunkt (AP, 302), der gerade die erste Einstellungsverarbeitung (S404-S407) aktiviert, von der Erfassungseinheit (205, 206) nicht erfasst wird, die Auswahleinheit (210) Ausführen der zweiten Einstellungsverarbeitung (S408-S411) durch die zweite Einstellungseinheit (208) auswählt; und
eine Steuereinheit (209), die konfiguriert ist, zu steuern, weder die erste Einstellungsverarbeitung noch die zweite Einstellungsverarbeitung auszuführen, wenn sowohl ein Zugangspunkt (AP, 302), der gerade die erste Einstellungsverarbeitung aktiviert, als auch eine Vorrichtung (B, 304), die gerade die zweite Einstellungsverarbeitung aktiviert, durch die Erfassungseinheit (205, 206) erfasst werden.

2. Kommunikationsvorrichtung (A, 301) nach Anspruch 1, wobei, wenn ein Zugangspunkt (AP, 302), der gerade die erste Einstellungsverarbeitung (S404-S407) aktiviert, durch die Erfassungseinheit (205, 206) erfasst wird und eine andere Kommunikationsvorrichtung (B, 304), die gerade die zweite Einstellungsverarbeitung (S408-5411) aktiviert, nicht erfasst wird, die Auswahleinheit (210) Ausführen der ersten Einstellungsverarbeitung (S404-S407) durch die erste Einstellungseinheit (207) auswählt.

3. Kommunikationsvorrichtung (A, 301) nach Anspruch 1 oder 2, wobei, wenn eine andere Kommunikationsvorrichtung (B, 304), die gerade die zweite Einstellungsverarbeitung (S408-S411) aktiviert, durch die Erfassungseinheit (205, 206) erfasst wird und ein Zugangspunkt (AP, 302), der gerade die erste Einstellungsverarbeitung (S404-S407) aktiviert, von der Erfassungseinheit (205, 206) nicht erfasst wird, die Auswahleinheit (210) Ausführen der zweiten Einstellungsverarbeitung (S408-S411) durch die zweite Einstellungseinheit (208) auswählt.

4. Kommunikationsvorrichtung (A, 301) nach einem der Ansprüche 1 bis 3, wobei, wenn die Auswahleinheit (210) die zweite Einstellungsverarbeitung (S408-S411) durch die zweite Einstellungseinheit (208) auswählt und aktiviert, und weder ein Zugangspunkt (AP, 302), der gerade die erste Einstellungsverarbeitung (S404-S407) aktiviert, noch eine andere Kommunikationsvorrichtung (B, 304), die gerade die zweite Einstellungsverarbeitung (S408-S411) aktiviert, durch die Erfassungseinheit (205, 206) erfasst wird (S410), die Erfassungseinheit (205, 206) eine Vorrichtung erfasst (S402), die gerade eine Kommunikationsparameter-Einstellungsverarbeitung aktiviert, in einem Zustand, in dem die zweite Einstellungsverarbeitung (S408-S411) durch die zweite Einstellungseinheit (208) gerade aktiviert wird.

5. Kommunikationsvorrichtung (A, 301) nach Anspruch 4, wobei, nachdem die zweite Einstellungsverarbeitung (S408-S411) durch die zweite Einstellungseinheit (208) aktiviert ist, wenn ein Zugangspunkt (AP, 302), der gerade die erste Einstellungsverarbeitung (S404-S407) aktiviert, durch die Erfassungseinheit (205, 206) erfasst wird, die Kommunikationsvorrichtung (A, 301) die zweite Einstellungsverarbeitung (S408-S411) stoppt.

6. Kommunikationsvorrichtung (A, 301) nach Anspruch 1, wobei die Erfassungseinheit (205, 206) konfiguriert ist zum Erfassen eines Zugangspunkts (AP, 302), der gerade die erste Einstellungsverarbeitung (S404 - S407) aktiviert, oder einer anderen Vorrichtung (B, 304), die gerade die zweite Einstellungsverarbeitung (S408-S411) in einem Ad-Hoc-Modus aktiviert.

7. Kommunikationsvorrichtung (A301) nach Anspruch 1, wobei die in der ersten oder zweiten Einstellungsverarbeitung eingestellten Kommunikationsparameter mindestens eines von einem Verschlüsselungssystem, einem Verschlüsselungsschlüssel, einem Authentifizierungsverfahren und einem Authentifizierungsschlüssel enthalten.

8. Kommunikationsvorrichtung (A, 301) nach Anspruch 1, wobei die erste Einstellungsverarbeitung Wi-Fi Protected Setup ist.

9. Kommunikationsvorrichtung (A, 301) nach Anspruch 1, wobei die zweite Einstellungsverarbeitung eine Einstellungsverarbeitung zum Einstellen eines Kommunikationsparameters zum direkten Kommunizieren mit der anderen Kommunikationsvorrichtung (B, 304) ist und umfasst: Empfangen eines Kommunikationsparameters von der anderen Kommunikationsvorrichtung (B, 304) oder Bereitstellen eines Kommunikationsparameters für die andere Kommunikationsvorrichtung (B, 304).

10. Kommunikationsvorrichtung (A, 301) nach Anspruch 1, wobei die zweite Einstellungsverarbeitung eine Verarbeitung zum Einstellen eines Kommunikationsparameters für Ad-Hoc-Kommunikation ist.

11. Ein Verfahren zum Steuern einer Kommunikationsvorrichtung (A, 301), umfassend:
Erfassen (S402) einer Vorrichtung (AP, 302; B, 304), die gerade Kommunikationsparametereinstellungsverarbeitung aktiviert, durch eine Erfassungseinheit (205, 206); und
Auswählen (S403), ob basierend auf einer ersten Einstellungsverarbeitung (S404-S407) Kommunikationsparametereinstellungsverarbeitung mit einem Zugangspunkt (AP, 302) ausgeführt werden soll, oder ob basierend auf einer zweiten Einstellungsverarbeitung (S408 - S411) Kommunikationsparametereinstellungsverarbeitung mit einer vom Zugangspunkt (AP, 302) verschiedenen anderen Kommunikationsvorrichtung (B, 304) ausgeführt werden soll, gemäß dem Erfassungsergebnis (S402);
wobei, wenn ein Zugangspunkt (AP, 302), der gerade die erste Einstellungsverarbeitung aktiviert, durch die Erfassungseinheit (205, 206) erfasst wird, die Kommunikationsvorrichtung (A, 301) Ausführen der ersten Einstellungsverarbeitung (S404 - S407) auswählt, und falls ein Zugangspunkt (AP, 302), der gerade die erste Einstellungsverarbeitung (S404 - S407) aktiviert, nicht erfasst wird, die Kommunikationsvorrichtung (A, 301) Ausführen der zweiten Einstellungsverarbeitung (S408-S411) auswählt;
Ausführen weder der ersten Einstellungsverarbeitung noch der zweiten Einstellungsverarbeitung, wenn sowohl ein Zugangspunkt (AP, 302), der gerade die erste Einstellungsverarbeitung aktiviert, als auch eine Vorrichtung (B, 304), die gerade die zweite Einstellungsverarbeitung aktiviert, durch die Erfassungseinheit (205, 206) erfasst werden.

12. Computerprogramm mit Anweisungen, welche bei Ausführen des Programms durch einen Computer den Computer veranlassen, das Verfahren nach Anspruch 11 auszuführen.

## Revendications

1. Appareil de communication (A, 301), comprenant :
une première unité de définition (207) destinée à exécuter un premier traitement de définition (S404-S407) pour définir des paramètres de communication avec un point d'accès (AP, 302) ;
une seconde unité de définition (208) destinée à exécuter un second traitement de définition (S408-S411) pour définir des paramètres de communication avec un autre appareil de communication (B, 304) qui n'est pas un point d'accès (AP, 302) ;
une unité de détection (205, 206) configurée pour détecter (S402) un appareil (AP, 302 ; B, 304) qui active le premier traitement ou le second traitement de définition ;
une unité de sélection (210) configurée pour sélectionner (S404) s'il convient d'exécuter le premier traitement de définition (S404-S407) par la première unité de définition (207) ou d'exécuter le second traitement de définition (S408-S411) par la seconde unité de définition (208), sur la base de la détection exécutée par l'unité de détection (205, 206),
dans lequel, si un point d'accès (AP, 302) qui active le premier traitement de définition est détecté par l'unité de détection (205, 206), l'unité de sélection (210) sélectionne l'exécution du premier traitement de définition (S404-S407) par la première unité de définition (207), et si un point d'accès (AP, 302) qui active le premier traitement de définition (S404-S407) n'est pas détecté par l'unité de détection (205, 206), l'unité de sélection (210) sélectionne l'exécution du second traitement de définition (S408-S411) par la seconde unité de définition (208) ; et
une unité de commande (209) configurée pour commander de n'exécuter ni le premier traitement de définition ni le second traitement de définition si un point d'accès (AP, 302) qui active le premier traitement de définition et un appareil (B, 304) qui active le second traitement de définition sont tous les deux détectés par l'unité de détection (205, 206).

2. Appareil de communication (A, 301) selon la revendication 1, dans lequel, si un point d'accès (AP, 302) qui active le premier traitement de définition (S404-S407) est détecté par l'unité de détection (205, 206) et si un autre appareil de communication (B, 304) qui active le second traitement de définition (S408-S411) ne sont pas détectés, l'unité de sélection (210) sélectionne l'exécution du premier traitement de définition (S404-S407) par la première unité de définition (207).

3. Appareil de communication (A, 301) selon la revendication 1 ou 2, dans lequel, si un autre appareil de communication (B, 304) qui active le second traitement de définition (S408-S411) est détecté par l'unité de détection (205, 206) et si un point d'accès (AP, 302) qui active le premier traitement de définition (S404-S407) n'est pas détecté par l'unité de détection (205, 206), l'unité de sélection (210) sélectionne l'exécution du second traitement de définition (S408-S411) par la seconde unité de définition (208).

4. Appareil de communication (A, 301) selon l'une quelconque des revendications 1 à 3, dans lequel, si l'unité de sélection (210) sélectionne et active le second traitement de définition (S408-S411) par la seconde unité de définition (208), et si ni un point d'accès (AP, 302) qui active le premier traitement de définition (S404-S407) ni un autre appareil de communication (B, 304) qui active le second traitement de définition (S408-S411) n'est détecté (S410) par l'unité de détection (205, 206), l'unité de détection (205, 206) détecte (S402) un appareil qui active un traitement de définition de paramètres de communication dans un état dans lequel le second traitement de définition (S408-S411) par la seconde unité de définition (208) est activé.

5. Appareil de communication (A, 301) selon la revendication 4, dans lequel, après l'activation du second traitement de définition (S408-S411) par la seconde unité de définition (208), si un point d'accès (AP, 302) qui active le premier traitement de définition (S404-S407) est détecté par l'unité de détection (205, 206), l'appareil de communication (A, 301) interrompt le second traitement de définition (S408-S411).

6. Appareil de communication (A, 301) selon la revendication 1, dans lequel l'unité de détection (205, 206) est configurée pour détecter, dans un mode ad hoc, un point d'accès (AP, 302) qui active le premier traitement de définition (S404-S407) ou un autre appareil (B, 304) qui active le second traitement de définition (S408-S411).

7. Appareil de communication (A, 301) selon la revendication 1, dans lequel les paramètres de communication définis lors du premier traitement de définition ou du second traitement de définition comprennent au moins l'un d'un système de chiffrement, d'une clé de chiffrement, d'un procédé d'authentification et d'une clé d'authentification.

8. Appareil de communication (A, 301) selon la revendication 1, dans lequel le premier traitement de définition est une configuration Wi-Fi sécurisée (Wi-Fi Protected Setup).

9. Appareil de communication (A, 301) selon la revendication 1, dans lequel le second traitement de définition est un traitement de définition servant à définir un paramètre de communication permettant une communication directe avec l'autre appareil de communication (B, 304) et inclut la réception d'un paramètre de communication de l'autre appareil de communication (B, 304) ou la fourniture d'un paramètre de communication à l'autre appareil de communication (B, 304).

10. Appareil de communication (A, 301) selon la revendication 1, dans lequel le second traitement de définition est un traitement destiné à définir un paramètre de communication d'une communication ad hoc.

11. Procédé de commande d'un appareil de communication (A, 301), comprenant les étapes consistant à :
détecter (S402), par une unité de détection (205, 206), un appareil (AP, 302 ; B, 304) qui active un traitement de définition de paramètres de communication ; et
sélectionner (S403) s'il convient d'exécuter le traitement de définition de paramètres de communication avec un point d'accès (AP, 302) sur la base d'un premier traitement de définition (S404-S407) ou d'exécuter un traitement de définition de paramètres de communication avec un autre appareil de communication (B, 304), qui est différent du point d'accès (AP, 302), sur la base d'un second traitement de définition (S408-S411), conformément au résultat de détection (S402) ;
où, si un point d'accès (AP, 302) qui active le premier traitement de définition est détecté par l'unité de détection (205, 206), l'appareil de communication (A, 301) sélectionne l'exécution du premier traitement de définition (S404-S407), et si un point d'accès (AP, 302) qui active le premier traitement de définition (S404-S407) n'est pas détecté, l'appareil de communication (A, 301) sélectionne l'exécution du second traitement de définition (S408-S411) ;
n'exécuter ni le premier traitement de définition ni le second traitement de définition si un point d'accès (AP, 302) qui active le premier traitement de définition et un appareil (B, 304) qui active le second traitement de définition sont tous les deux détectés par l'unité de détection (205, 206).

12. Programme informatique comprenant des instructions qui, lorsque le programme est exécuté par un ordinateur, amènent l'ordinateur à mettre en œuvre le procédé selon la revendication 11.
